# EUROPÄISCHE PATENTANMELDUNG

(11) **EP 0 865 215 A2**
(43) Veröffentlichungstag der Anmeldung: **16.09.1998**
(21) Anmeldenummer: 98810216.6
(22) Anmeldetag: 13.03.1998
(51) Int. Cl.: H04Q 3/66, H04Q 3/00

(54) **Verfahren für das Routing zum Minimieren von Fernmeldegebühren und Anordnung zur Durchführung des Verfahrens**

(30) Priorität: 13.03.1997 CH 613/97
(71) Anmelder: Ascom Hasler AG, CH-3000 Bern 14 (CH)
(72) Erfinder: Burkhalter, Peter, 3007 Bern (CH); Friedli, Werner, 3176 Neuenegg (CH)
(74) Vertreter: Roshardt, Werner Alfred, Dipl.-Phys.

(57) **Zusammenfassung**

Ein an einem Fernmeldeanschluss (2.1) angeschlossener Fernmeldegebührenminimierungsrouter (1.1) wählt in Abhängigkeit von gespeicherten Routingdaten und einer von einem Anrufer gewählten Nummer eines anzurufenden Fernmeldeanschlusses (2.2) einen Übertragungsweg zwischen dem Fernmeldeanschluss (2.1) des Fernmeldegebührenminimierungsrouters (1.1) und dem anzurufenden Fernmeldeanschluss (2.2) aus. Der Fernmeldegebührenminimierungsrouter (1.1) empfängt selbsttätig wiederholt aktualisierte und hinsichtlich der Fernmeldegebührenminimierung optimierte Routingdaten von einer Serviceplattform (8) und speichert diese Routingdaten in einer Speichervorrichtung (14). Mindestens ein an einem Fernmeldeanschluss (2.1) angeschlossener Fernmeldegebührenminimierungsrouter (1.1) ist zum Auswählen eines Übertragungsweges zwischen dem Fernmeldeanschluss (2.1) des Fernmeldegebührenminimierungsrouters (1.1) und einem anzurufenden Fernmeldeanschluss (2.2) sowie zum selbsttätigen wiederholten Empfangen und Speichern von Routingdaten ausgebildet. Eine Serviceplattform (8) ist zum Sammeln und Aktualisieren von Fernmeldegebührendaten, Aufbereiten - in Abhängigkeit der gesammelten Fernmeldegebührendaten - von hinsichtlich der Fernmeldegebührenminimierung optimierten Routingdaten, Speichern von Routingdaten und Übermitteln von Routingdaten an mindestens einen Fernmeldegebührenminimierungsrouter (1.1) ausgebildet.

Das Verfahren für das Routing zum Minimieren von Fernmeldegebühren und die Anordnung zur Durchführung des Verfahrens gewährleisten, dass im Fernmeldegebührenminimierungsrouter (1.1) stets aktuelle Fernmeldegebührendaten der verschiedenen Fernmeldebetriebsgesellschaften für verschiedene Übertragungswege gespeichert sind.

## Beschreibung

### Technisches Gebiet

Die vorliegende Erfindung betrifft einen Fernmeldegebührenminimierungsrouter und ein Verfahren für das Routing zum Minimieren von Fernmeldegebühren. Insbesondere betrifft die Erfindung einen Fernmeldegebührenminimierungsrouter und ein Verfahren für das Routing zum Minimieren von Fernmeldegebühren, die sowohl für Sprachkanäle als auch für Datenkanäle auf Fernmeldenetzen geeignet sind.

### Stand der Technik

Unter dem aus dem Englischen stammenden Begriff "Routing" versteht man das Ermitteln oder Auswählen eines geeigneten Übertragungsweges für eine Nachricht. Fernmeldegebührenminimierungsrouter sind Geräte zum Auswählen eines geeigneten Übertragungsweges aus einer Vielzahl von möglichen Übertragungswegen zwischen einem Anschluss eines Anrufers und einem angewählten Anschluss auf dem weltweiten Fernmeldenetz, wobei die Minimierung der Fernmeldegebühren das entscheidende Auswahlkriterium bildet.

Bis anfangs der 80er Jahre war der Fernmeldemarkt geprägt durch staatliche Monopolgesellschaften, wodurch der Benutzer, der eine Verbindung zwischen zwei bestimmten Anschlüssen im weltweiten Fernmeldenetz benutzen wollte, keine Auswahlmöglichkeit für den Übertragungsweg zwischen den Anschlüssen hatte. Seit Beginn der 80er Jahre werden, zumindest für Verbindungen zwischen lokalen Fernmeldenetzen, in verschiedenen Ländern einander konkurrenzierende Fernmeldebetriebsgesellschaften zugelassen. Dabei ist ein geopolitisches Gebiet, wie z.B. ein Land, in mehrere aneinandergrenzende, nicht überlappende Bereiche unterteilt, die von lokalen Fernmeldebetriebsgesellschaften bedient werden. Für Anrufe innerhalb eines lokalen Fernmeldenetzes hat ein Anrufer somit noch immer keine Auswahlmöglichkeit, da sie ausschliesslich über das lokale Fernmeldenetz abgewickelt werden. Hingegen gibt es seit Beginn der 80er Jahre mehrere Anbieter, welche die Verbindungen zwischen den lokalen Fernmeldenetzen bereitstellen und dafür zum Teil unterschiedliche Fernmeldegebühren verlangen. Bei Anrufen über das lokale Fernmeldenetz hinaus werden die Übertragungswege an den Verbindungsenden, bei den Anschlüssen, weiterhin durch die vorgegebenen Betreiber der lokalen Fernmeldenetze bereitgestellt, in deren Bereichen sich die Anschlüsse befinden. Für die Übertragungswege zwischen den lokalen Fernmeldenetzen besteht hingegen eine Auswahlmöglichkeit zwischen Übertragungswegen über die Fernmeldenetze von verschiedenen Fernmeldebetriebsgesellschaften. Für einen Anrufer, der von einem bestimmten Anschluss aus bloss einen Anschluss am anderen Ende eines Übertragungsweges erreichen will, ist das Verfahren zur Auswahl zwischen verschiedenen Fernmeldebetriebsgesellschaften für einzelne Wegabschnitte mühsam, denn die einzelnen Fernmeldebetriebsgesellschaften müssen jeweils über unterschiedliche Zugangscodes ausgewählt werden und können zusätzlich einen persönlichen ldentifikationscode des Benutzers verlangen. Meistens verfügt der Anrufer nicht über die nötigen Kenntnisse darüber, welche Fernmeldebetriebsgesellschaft für einen bestimmten Wegabschnitt zu einem bestimmten Zeitpunkt jeweils am günstigsten ist. Deshalb wurden Geräte - sogenannte Fernmeldegebührenminimierungsrouter - entwickelt, die dem Anrufer die Arbeit des Routings zum Minimieren von Fernmeldegebühren (d.h. des Auswählens der jeweils am besten geeigneten Fernmeldebetriebsgesellschaft für einen bestimmten Übertragungsweg) abnehmen.

U.S. 4 791 665 von AT&T Information Systems offenbart ein Verfahren und eine Vorrichtung für einen Fernmeldegebührenminimierungsrouter zur automatischen Auswahl eines geeigneten und kostengünstigen Übertragungsweges zwischen lokalen Fernmeldenetzen. Wenn ein Anschluss ausserhalb des lokalen Fernmeldenetzes angewählt wird, so wird durch die Vorrichtung der geeignete und kostengünstigste Übertragungsweg ausgewählt und der Zugangscode, der persönliche ldentifikationscode des Anrufers sowie die Nummer des angewählten Anschlusses ausgegeben und damit die Verbindung hergestellt. Die Vorrichtung enthält eine Datenbank, welche die Fernmeldegebührendaten der verschiedenen Fernmeldebetriebsgesellschaften für Verbindungen zwischen den lokalen Fernmeldenetzen enthält.

In U.S. 5 289 536 von NEC Corporation wird eine Vorrichtung und ein Verfahren für das Fernmeldegebührenminimierungsrouting beschrieben, die speziell für den Einsatz in ISDN (Integrated Services Digital Network) Netzen geeignet sind. Das Routing für die Fernmeldegebührenminimierung berücksichtigt nicht nur den angewählten Anschluss und die in einem Speicher der Vorrichtung gespeicherten Fernmeldegebührendaten der verschiedenen Fernmeldebetriebsgesellschaften, sondern zusätzlich die Art der zu übertragenden Daten (Sprache, Fernkopierer, allgemeine digitale Daten).

WO 96/33583 von Eurotel Telecom Ltd. offenbart ein Verfahren und eine Vorrichtung für einen Fernmeldegebührenminimierungsrouter, die besonders für den Einsatz in einem privaten Fernmeldenetz geeignet sind. Auch bei dieser Vorrichtung sind die Fernmeldegebührendaten der verschiedenen Fernmeldebetriebsgesellschaften in Form von Tabellen in einem geeigneten Speicher abgelegt. Zusätzlich kann der Fernmeldegebührenminimierungsrouter programmiert werden, um zu verhindern, dass Übertragungswege, die innerhalb eines bevorzugten (meistens privaten) Fernmeldenetzes hergestellt werden können, über Netze von anderen Fernmeldebetriebsgesellschaften hergestellt werden, selbst wenn der Anrufer explizit Zugangscodes zu anderen Fernmeldenetzen eingibt. Diese Funktion ist besonders für private Fernmeldebetriebsgesellschaften interessant.

Durch die zunehmende Liberalisierung der nationalen und internationalen Fernmeldemärkte ist die Anzahl der Fernmeldebetriebsgesellschaften, die für eine Verbindung zwischen dem Anschluss eines Anrufers und einem angewählten Anschluss ausgewählt werden können, ständig im Zunehmen begriffen. Dadurch sind die Fernmeldebetriebsgesellschaften einem zunehmenden Wettbewerbsdruck ausgesetzt, was zur Folge hat, dass sie ihre Fernmeldegebühren für die verschiedenen Übertragungswege laufend an die sich verändernde Marktsituation anpassen müssen, um im Wettbewerb mit den Konkurrenten bestehen zu können. Die Fernmeldegebühren für einen Übertragungsweg zwischen dem Anschluss eines Anrufers und einem angerufenen Anschluss variieren nicht nur in Abhängigkeit der ausgewählten Netze der verschiedenen Fernmeldebetriebsgesellschaften, sondern auch in Abhängigkeit des Wochentages, der Tageszeit, der Verbindungsdauer und eventuell weiterer Parameter. Somit hängt auch der optimale Übertragungsweg zwischen zwei Anschlüssen von all diesen Parametern ab. Zur Auswahl eines optimalen Übertragungsweges zwischen zwei Anschlüssen müssen deshalb die von Tageszeit, Wochentag, Gesprächsdauer und anderen Parametern abhängigen Fernmeldegebühren der verschiedenen Fernmeldebetriebsgesellschaften miteinander verglichen werden, wobei aber auch die Relationen zwischen den Parametern und den Fernmeldegebühren bei den einzelnen Fernmeldebetriebsgesellschaften aufgrund der Wettbewerbssituation rasche zeitliche Änderungen erfahren. Für die bisher bekannten Fernmeldegebührenminimierungsrouter der oben beschriebenen Arten entstehen deshalb Probleme, weil die in den Speichern der Vorrichtungen abgelegten Daten über die Fernmeldegebühren der Fernmeldebetriebsgesellschaften für die verschiedenen Verbindungen sehr rasch nicht mehr dem neuesten Stand entsprechen und dadurch der Vorteil der Verwendung eines Fernmeldegebührenminimierungsrouters - durch die Auswahl des optimalen Übertragungsweges Fernmeldegebühren sparen zu können - verloren geht. Bei vielen Fernmeldegebührenminimierungsroutern nach dem bekannten Stand der Technik ist zwar vorgesehen, dass die Daten der Tabellen mit den Fernmeldegebührendaten der verschiedenen Fernmeldebetriebsgesellschaften aktualisiert werden können, wobei diese Aktualisierung jedoch stets von einem speziell ausgebildeten Fachmann durchgeführt werden muss und zeitlich aufwendig ist. Somit führt die durch die zunehmende Liberalisierung der Fernmeldemärkte notwendig gewordene häufigere Aktualisierung der in den Fernmeldegebührenminimierungsroutern gespeicherten Fernmeldegebührendaten zu zusätzlichen Kosten für die Benutzer von Fernmeldegebührenminimierungsroutern, welche die durch die Liberalisierung bewirkten Kosteneinsparungen aufgrund der wettbewerbsbedingten Fernmeldegebührensenkungen der Fernmeldebetriebsgesellschaften zum Teil wieder zunichte machen.

Im Zuge der gegenwärtigen Liberalisierung der Fernmeldemärkte ist vorgesehen (und zum Teil bereits verwirklicht), Konkurrenz nicht nur für Verbindungen zwischen lokalen Fernmeldenetzen, sondern auch für die lokalen Fernmeldenetze selbst zuzulassen. So können z.B. in Japan Kunden von Fernmeldediensten bereits heute zwischen zwei einander konkurrenzierenden Fernmeldebetriebsgesellschaften auswählen, und in der Schweiz kann zumindest für Verbindungen zu den Schweizerischen Bundesbahnen SBB zwischen dem Fernmeldenetz der nationalen Fernmeldegesellschaft Telekom und dem Fernmeldenetz der SBB ausgewählt werden. Somit ist absehbar, dass bereits in naher Zukunft für den Benutzer von Fernmeldediensten die Auswahlmöglichkeiten zwischen verschiedenen Fernmeldebetriebsgesellschaften weiter zunehmen wird, wodurch auch der Dschungel von Fernmeldegebührensätzen unübersichtlicher wird und die Notwendigkeit für eine häufigere Aktualisierung der in den Fernmeldegebührenminimierungsroutern gespeicherten Fernmeldegebührendaten weiter verstärkt wird.

### Darstellung der Erfindung

Es ist deshalb eine Aufgabe der vorliegenden Erfindung, ein Verfahren für das Routing zum Minimieren von Fernmeldegebühren und eine Anordnung zur Durchführung des Verfahrens anzugeben, durch welche die Nachteile der bekannten Fernmeldegebührenminimierungsrouter überwunden werden.

Zur Lösung dieser Aufgabe stellt die vorliegende Erfindung ein Verfahren mit den im kennzeichnenden Teil des Patentanspruchs 1 definierten Merkmalen und eine Anordnung mit den Merkmalen im kennzeichnenden Teil des Patentanspruchs 7 bereit.

Beim erfindungsgemässen Verfahren für das Routing zum Minimieren von Fernmeldegebühren wählt ein an einem Fernmeldeanschluss angeschlossener Fernmeldegebührenminimierungsrouter in Abhängigkeit von gespeicherten Routingdaten und einer von einem Anrufer gewählten Nummer eines anzurufenden Fernmeldeanschlusses einen Übertragungsweg zwischen dem Fernmeldeanschluss des Fernmeldegebührenminimierungsrouters und dem anzurufenden Fernmeldeanschluss aus. Weiter empfängt der Fernmeldegebührenminimierungsrouter selbsttätig wiederholt aktualisierte und hinsichtlich der Fernmeldegebührenminimierung optimierte Routingdaten von einer Serviceplattform und speichert diese Routingdaten in einer Speichervorrichtung.

Durch das erfindungsgemässe Verfahren wird gewährleistet, dass der Fernmeldegebührenminimierungsrouter den Übertragungsweg stets anhand von hinsichtlich der Fernmeldegebührenminimierung optimierten Routingdaten auswählt, die aufgrund von aktuellen Fernmeldegebührendaten von verschiedenen Fernmeldebetriebsgesellschaften optimiert und aufbereitet wurden. Der Fernmeldegebührenminimierungsrouter empfängt die aktualisierten und optimierten Routingdaten immer wieder selbsttätig von der Serviceplattform und speichert diese Routingdaten in seiner Speichervorrichtung.

Bei einer bevorzugten Ausführungsart der Erfindung werden die aktualisierten und optimierten Routingdaten vom Fernmeldegebührenminimierungsrouter bei der Serviceplattform abgefragt und in einer Speichervorrichtung des Fernmeldegebührenminimierungsrouters gespeichert. Der Abfragezeitpunkt wird festgelegt, indem zu regelmässigen Zeitabständen eine mit Hilfe einer Zufallsfunktion bestimmte Zeitspanne addiert wird. Dadurch wird verhindert, dass eine Vielzahl von Routingdatenabfragen von verschiedenen Fernmeldegebührenminimierungsroutern gleichzeitig bei der Serviceplattform eintreffen, was eine Überlastung der Fernmeldeanschlüsse bei der Serviceplattform oder eine Überlastung der Serviceplattform selbst zur Folge haben könnte. Vorzugsweise kann der Schritt, die mit Hilfe einer Zufallsfunktion bestimmte Zeitspanne zu den regelmässigen Zeitabständen zu addieren, wahlweise ein- und ausgeschaltet werden.

Bei einer anderen Ausführungsart der Erfindung werden die Routingdaten vom Fernmeldegebührenminimierungsrouter im wesentlichen in regelmässigen Zeitabständen abgefragt und gespeichert. Die regelmässigen Abfrageperioden können (vorzugsweise gegen entsprechend angepasste Servicegebühren des Betreibers der Serviceplattform) z.B. im Bereich von einem Monat, einer Woche, einem Tag, einer Stunde oder einer Minute liegen. Damit für die Übertragung der aktualisierten Routingdaten von der Serviceplattform zum Fernmeldegebührenminimierungsrouter keine unnötig hohen Fernmeldegebühren zu entrichten sind, wird der Zeitpunkt zum Abfragen der Routingdaten vorzugsweise auf jene Zeiten festgelegt, an denen die Fernmeldegebühren minimal sind.

Bei einer nochmals anderen Variante der Erfindung wird die Übertragung der aktualisierten und optimierten Routingdaten von der Serviceplattform zum Fernmeldegebührenminimierungsrouter durch die Serviceplattform initiiert. Vorzugsweise wird diese Übertragung jedesmal dann ausgelöst, wenn die Serviceplattform eine Änderung in denjenigen Fernmeldegebührendaten feststellt, die zum Aufbereiten der für den Fernmeldegebührenminimierungsrouter relevanten optimierten Routingdaten benutzt werden.

Zum Minimieren der Fernmeldegebühren bei von der Serviceplattform ausgehenden Datenübertragungen kann auch zwischen der Serviceplattform und dem der Serviceplattform zugeordneten Fernmeldeanschluss ein Fernmeldegebührenminimierungsrouter angeschlossen sein, der das Routing für den Verbindungsaufbau von der Serviceplattform aus ausführt.

Vorzugsweise übermittelt der Fernmeldegebührenminimierungsrouter selbsttätig wiederholt Daten an die Serviceplattform, welche von der Serviceplattform zur Überwachung der Funktionsfähigkeit des Fernmeldegebührenminimierungsrouters verwendet werden. Bei diesen Überwachungsdaten kann es sich entweder um dieAbfragedaten selbst handeln, mit denen der Fernmeldegebührenminimierungsrouter einen Übertragungsvorgang zum Übertragen von aktuellen Routingdaten von der Serviceplattform zum Fernmeldegebührenminimierungsrouter auslöst, oder es kann sich um spezielle Daten über den Betriebszustand des Fernmeldegebührenminimierungsrouters handeln. Die Überwachungsdaten können eine ldentifikationsnummer des Fernmeldegebührenminimierungsrouters, das Datum der letzten Abfrage o.ä. umfassen.

Bei einer bevorzugten Ausführungsart der Erfindung erzeugt der Fernmeldegebührenminimierungsrouter in Abhängigkeit der gespeicherten Routingdaten und des zwischen dem Fernmeldeanschluss des Fernmeldegebührenminimierungsrouters und dem anzurufenden Fernmeldeanschluss ausgewählten Übertragungsweges Gebührenimpulse. Diese Gebührenimpulse entsprechen den gebräuchlichen Gebührenimpulsen (AOC, Advice of Charge), die durch die Fernmeldevermittlungszentralen in zahlreichen bestehenden Fernmeldenetzen erzeugt werden und zur aktuellen Anzeige der Fernmeldegebühren für eine laufende Fernmeldeverbindung oder zur Vorkalkulation der Fernmeldegebühren (z.B. in einem Hotel) verwendet werden. Ein Fernmeldegebührenminimierungsrouter gemäss dieser Ausführungsart der Erfindung ist somit in Verbindung mit einem gebräuchlichen Fernmeldeendgerät einsetzbar, das zur Anzeige der laufenden Fernmeldegebühren ausgerüstet ist.

Vorzugsweise werden durch die Serviceplattform mittels in einer Speichervorrichtung der Serviceplattform gespeicherten Daten über die Fernmeldegebührenminimierungsrouter aus der Vielzahl der gespeicherten Routingdaten diejenigen bestimmt, die für den jeweiligen Fernmeldegebührenminimierungsrouter relevant sind, und anschliessend nur die für den jeweiligen Fernmeldegebührenminimierungsrouter relevanten Routingdaten zum Fernmeldegebührenminimierungsrouter übertragen.

Eine Anordnung zur Durchführung des erfindungsgemässen Verfahrens umfasst mindestens einen an einem Fernmeldeanschluss angeschlossenen Fernmeldegebührenminimierungsrouter, der zum Auswählen eines Übertragungsweges zwischen dem Fernmeldeanschluss des Fernmeldegebührenminimierungsrouters und einem anzurufenden Fernmeldeanschluss sowie zum selbsttätigen wiederholten Empfangen und Speichern von Routingdaten ausgebildet ist, und eine Serviceplattform, die zum Sammeln und Aktualisieren von Fernmeldegebührendaten, Aufbereiten - in Abhängigkeit der gesammelten Fernmeldegebührendaten - von hinsichtlich der Fernmeldegebührenminimierung optimierten Routingdaten, Speichern von Routingdaten und Übermitteln von Routingdaten an mindestens einen Fernmeldegebührenminimierungsrouter ausgebildet ist.

Ein erfindungsgemässer Fernmeldegebührenminimierungsrouter umfasst Mittel zum Anschliessen des Fernmeldegebührenminimierungsrouters an einen Fernmeldeanschluss, Mittel zum Empfangen einer von einem Anrufer gewählten Nummer eines anzurufenden Fernmeldeanschlusses, Mittel zum Auswählen - in Abhängigkeit von gespeicherten Routingdaten und der empfangenen Nummer - eines Übertragungsweges zwischen dem Fernmeldeanschluss des Fernmeldegebührenminimierungsrouters und dem anzurufenden Fernmeldeanschluss, Mittel zum selbsttätigen wiederholten Empfangen von Routingdaten und Mittel zum Speichern der Routingdaten.

Vorzugsweise umfasst ein Fernmeldegebührenminimierungsrouter gemäss der Erfindung weiter Mittel zum Erzeugen von Gebührenimpulsen in Abhängigkeit der gespeicherten Routingdaten und des zwischen dem Fernmeldeanschluss des Fernmeldegebührenminimierungsrouter und dem anzurufenden Fernmeldeanschluss ausgewählten Übertragungsweges. Diese Gebührenimpulse können zur aktuellen Anzeige der Fernmeldegebühren für eine laufende Fernmeldeverbindung oder zur Vorkalkulation der Fernmeldegebühren verwendet werden. Ein Fernmeldegebührenminimierungsrouter gemäss dieser Ausführungsart der Erfindung ist somit in Verbindung mit einem gebräuchlichen Fernmeldeendgerät einsetzbar, das zur Anzeige der laufenden Fernmeldegebühren aufgrund von empfangenen Gebührenimpulsen ausgerüstet ist.

Ein Fernmeldegebührenminimierungsrouter gemäss einer bevorzugten Ausführungsart der Erfindung umfasst weiter Mittel zum Erzeugen einer Zufallsfunktion und Mittel zum Bestimmen des Zeitpunktes zum Abfragen der Routingdaten bei der Serviceplattform derart, dass zu regelmässigen Zeitabständen eine mit Hilfe der Zufallsfunktion bestimmte Zeitspanne addiert wird. Damit kann verhindert werden, dass eine Vielzahl von Routingdatenabfragen von verschiedenen Fernmeldegebührenminimierungsroutern gleichzeitig bei der Serviceplattform eintrifft. Vorzugsweise umfasst ein Fernmeldegebührenminimierungsrouter gemäss dieser Ausführungsart der Erfindung weiter eine Vorrichtung zum wahlweisen Ein- und Ausschalten der Zufallsfunktion bzw. der Addition einer zufällig bestimmten Zeitspanne zu den regelmässigen Zeitabständen.

Eine erfindungsgemässe Serviceplattform umfasst Mittel zum Empfangen von Daten über Fernmeldegebühren einer oder mehrerer Fernmeldebetriebsgesellschaften für ein oder mehrere Fernmeldenetze, Mittel zum Aufbereiten - in Abhängigkeit dieser gesammelten Fernmeldegebührendaten - von hinsichtlich der Fernmeldegebührenminimierung optimierten Routingdaten, Mittel zum Speichern der Routingdaten und Mittel zum Übermitteln von Routingdaten an mindestens einen Fernmeldegebührenminimierungsrouter aus.

Aktuelle Daten über die Fernmeldegebühren der verschiedenen Fernmeldebetriebsgesellschaften für verschiedene Übertragungswege werden immer wieder zur Serviceplattform übertragen, von dieser empfangen und in ihrer Speichervorrichtung gespeichert. Die Übertragung der Fernmeldegebührendaten kann automatisch erfolgen, wobei die Datenübertragung entweder von der Serviceplattform oder von den Fernmeldebetriebsgesellschaften initiiert werden kann. Es kann jedoch auch vorgesehen sein, die Gebührendaten der verschiedenen Fernmeldebetriebsgesellschaften manuell in die Serviceplattform einzugeben. Dazu sind an der Serviceplattform entsprechende Dateneingabemittel (wie z.B. Datenterminals mit Tastatur und Bildschirm, Diskettenlesegeräte, Bandlesegeräte o.ä.) vorzusehen.

Aufgrund dieser aktuellen Fernmeldegebührendaten werden für jeden Fernmeldegebührenminimierungsrouter hinsichtlich der Fernmeldegebührenminimierung optimierte Routingdaten aufbereitet. Der Schritt des Aufbereitens der Routingdaten aus den Fernmeldegebührendaten umfasst eine Optimierung der Auswahl von möglichen Übertragungswegen zwischen Fernmeldeanschlüssen hinsichtlich der Fernmeldegebührenminimierung. Diese Optimierung kann auf einem einfachen Sortierverfahren beruhen.

Beim Aufbereiten der Routingdaten für die verschiedenen Fernmeldegebührenminimierungsrouter, die zum Empfangen von Routingdaten von der Serviceplattform vorgesehen sind, können bei einer bevorzugten Ausführungsart der Erfindung gerätespezifische Angaben und/oder benutzerspezifische Angaben für die jeweiligen Fernmeldegebührenminimierungsrouter berücksichtigt werden. Die entsprechenden geräte- und/oder benutzerspezifischen Angaben sind in der Speichervorrichtung der Serviceplattform gespeichert. Die gerätespezifischen Angaben können z.B. die maximale Speicherkapazität der Speichervorrichtung eines Fernmeldegebührenminimierungsrouters umfassen. Als benutzerspezifische Angaben können z.B. die bevorzugte Benutzung einer bestimmten Fernmeldebetriebsgesellschaft, der Ausschluss der Benutzung einer bestimmten Fernmeldebetriebsgesellschaft, der zeitliche Detaillierungsgrad für die Gebührenminimierung usw. berücksichtigt werden.

Die auf den aktualisierten und hinsichtlich der Fernmeldegebührenminimierung optimierten Fernmeldegebührendaten beruhenden Routingdaten können für jeden der von der Serviceplattform zu bedienenden Fernmeldegebührenminimierungsrouter den Zugangscode zu verschiedenen anzurufenden Zonen, Zeitangaben für den optimalen Zugriff zu einer Zone mittels eines bestimmten Zugriffscodes und Gebühreninformationen für die mit dem Zugriffscode aufgebaute Verbindung zwischen dem Fernmeldegebührenminimierungsrouter und der Zone umfassen.

Die aus den aktuellen Fernmeldegebührendaten aufbereiteten und hinsichtlich der Fernmeldegebührenminimierung optimierten Routingdaten werden in der Speichervorrichtung der Serviceplattform gespeichert.

Von diesen aktuellen, optimierten Routingdaten werden anschliessend die für die jeweiligen Fernmeldegebührenminimierungsrouter relevanten Routingdaten an die Fernmeldegebührenminimierungsrouter übertragen, wobei die Unterscheidung der relevanten von den nicht relevanten Daten wiederum anhand von geräte- und/oder benutzerspezifischen Angaben vorgenommen wird, die in der Speichervorrichtung der Serviceplattform gespeichert sind.

Bei einer bevorzugten Ausführungsart der vorliegenden Erfindung ist der Fernmeldegebührenminimierungsrouter in einem Fernmeldeendgerät integriert, bei anderen Ausführungsarten ist er als selbständige Vorrichtung ausgeführt. Unter Fernmeldeendgerät ist in der nachfolgenden Beschreibung, der Zeichnung und den Patentansprüchen stets ein beliebiges Fernmeldeendgerät wie ein Telefonapparat, ein Fernkopierer, eine Teilnehmervermittlungsanlage, ein Modem o.ä. zu verstehen. Da es sich bei der Mehrzahl der gegenwärtig in Betrieb stehenden Fernmeldeendgeräte um analoge Geräte handelt, ist der Fernmeldegebührenminimierungsrouter vorzugsweise zur Verwendung mit analogen Fernmeldeendgeräten ausgebildet. Im Hinblick auf die zunehmend weiter verbreiteten digitalen Endgeräte ist bei weiteren vorteilhaften Ausführungsarten der Fernmeldegebührenminimierungsrouter entweder zur Verwendung mit digitalen Fernmeldeendgeräten oder sowohl zur Verwendung mit analogen als auch zur Verwendung mit digitalen Fernmeldeendgeräten ausgebildet. Der Fernmeldegebührenminimierungsrouter kann entweder die Form einer diskreten Schaltung aufweisen oder rein softwaremässig ausgeführt sein. Zur Anzeige von verschiedenen Fernmeldegebührendaten und/oder Betriebsdaten kann der Fernmeldegebührenminimierungsrouter mit einer Anzeigevorrichtung (Display) versehen sein.

Bei einer weiteren Variante der Erfindung sind die Fernmeldegebührenminimierungsrouter mit einem Funkrufmodul (Pagermodul) und die Serviceplattform mit einer Sendeanlage versehen, damit zur schnellstmöglichen Aktualisierung der Routingdaten diese über ein Funkrufnetz (Pagernetz) von der Serviceplattform zu den Fernmeldegebührenminimierungsroutern übertragen werden können. Weiter können die Fernmeldegebührenminimierungsrouter zur Erhöhung der Betriebssicherheit im Falle von Stromknappheit mit einer externen Stromspeisung versehen sein.

Gemäss einer weiteren Variante der Erfindung kann der Fernmeldegebührenminimierungsrouter eine Anzeigevorrichtung (Display) aufweisen, mit welcher verschiedene Fernmeldegebührendaten und/oder Betriebsdaten angezeigt werden können. So kann ein Anrufer z.B. Informationen über die für den Übertragungsweg zum angerufenen Anschluss benutzten Fernmeldenetze, die dadurch anfallenden Fernmeldegebühren sowie die durch den Fernmeldegebührenminimierungsrouter erzielten Fernmeldegebühreneinsparungen, die Gesprächsdauer usw. direkt von der Anzeigevorrichtung ablesen.

Die nachfolgende detaillierte Beschreibung einer bevorzugten Ausführungsart der vorliegenden Erfindung dient in Verbindung mit den beiliegenden Zeichnungen nur als Beispiel für ein besseres Verständnis der Erfindung und ist nicht als Einschränkung des Schutzbereichs der vorliegenden Erfindung, wie sie in den Patentansprüchen definiert wird, aufzufassen. Für den Fachmann sind aus der nachfolgenden Beschreibung in Verbindung mit der beiliegenden Zeichnung und der Gesamtheit der Patentansprüche weitere vorteilhafte Ausführungsarten und Merkmalskombinationen ohne weiteres erkennbar, die jedoch immer noch innerhalb des Bereichs der vorliegenden Erfindung liegen.

### Kurze Beschreibung der Zeichnung

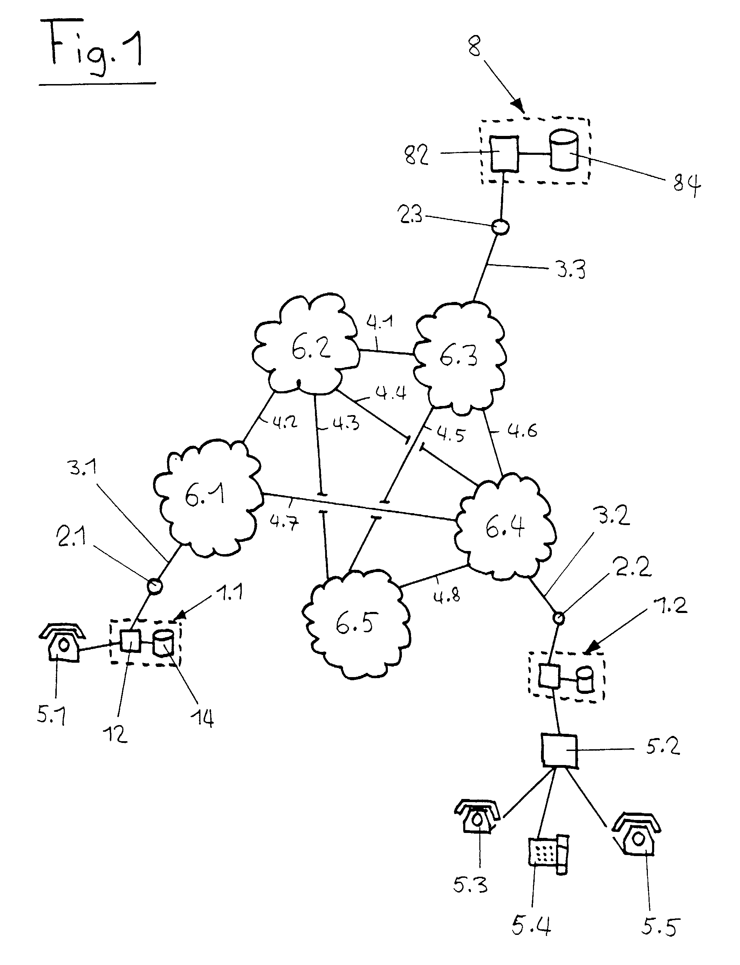

Die Figur 1 stellt in Form eines vereinfachten Blockdiagramms den Einsatz einer Ausführungsart der Erfindung in einer typischen Fernmeldenetz-Umgebung dar.

### Detaillierte Beschreibung einer bevorzugten Ausführungsart der Erfindung

Bei der in der Figur 1 dargestellten Ausführungsart der vorliegenden Erfindung ist ein erfindungsgemässer Fernmeldegebührenminimierungsrouter 1.1 zwischen einem Fernmeldeanschluss 2.1 und einem Fernmeldeendgerät 5.1 angeschlossen. Beim Fernmeldeendgerät 5.1 handelt es sich um ein gebräuchliches analoges Telefongerät 5.1, das mit Anzeigemitteln zum Anzeigen der laufenden Telefongebühren ausgerüstet ist. Der dem Telefongerät 5.1 zugeordnete Fernmeldeanschluss 2.1 ist über eine Vielzahl von Fernmeldenetzen 6.1 bis 6.5 mit einem Fernmeldeanschluss 2.2 verbunden, der einem Fernmeldeendgerät 5.2 in Form einer Teilnehmervermittlungsanlage 5.2 zugeordnet ist. Zwischen dem Fernmeldeanschluss 2.2 und der Teilnehmervermittlungsanlage 5.2 ist im dargestellten Beispiel ein weiterer erfindungsgemässer Fernmeldegebührenminimierungsrouter 1.2 angeschlossen. An der Teilnehmervermittlungsanlage 5.2 ist eine Gruppe von weiteren Fernmeldeendgeräten 5.3, 5.4, 5.5 angeschlossen. An einem weiteren in der Figur 1 dargestellten Fernmeldeanschluss 2.3 ist eine Serviceplattform 8 angeschlossen.

Beim dargestellten Beispiel sind die Fernmeldeanschlüsse 2.1, 2.2, 2.3 über Datenübertragungsverbindungen 3.1, 3.2 bzw. 3.3 je an einem einzigen Fernmeldenetz 6.1, 6.4 bzw. 6.3 angeschlossen, bei anderen Beispielen können sie aber ebensogut direkt an mehreren Fernmeldenetzen angeschlossen sein. Die verschiedenen Fernmeldenetze 6.1 bis 6.5 sind über eine Vielzahl von Datenübertragungsverbindungen 4.1 bis 4.8 direkt oder indirekt miteinander verbunden.

Bei der in der Figur 1 dargestellten Ausführungsart der vorliegenden Erfindung ist der Fernmeldegebührenminimierungsrouter 1.1 als selbständige Vorrichtung ausgeführt und als Vorschaltausrüstung zwischen dem Fernmeldeanschluss 2.1 und dem Telefongerät 5.1 angeschlossen. Da es sich beim Telefongerät 5.1 um ein analoges Telefongerät 5.1 handelt und der Fernmeldegebührenminimierungsrouter 1.1 zur Verwendung mit einem analogen Fernmeldeendgerät ausgebildet ist, reicht als Fernmeldegebührenminimierungsrouter-Anschlussverbindung 3.1 eine einfache analoge Zweidrahtleitung.

Der Fernmeldegebührenminimierungsrouter 1.2 ist ebenfalls als selbständige Vorrichtung ausgeführt und als Vorschaltausrüstung zwischen dem Fernmeldeanschluss 2.2 und der Teilnehmervermittlungsanlage 5.2 angeschlossen. Bei der Teilnehmervermittlungsanlage 5.2 handelt es sich um ein ISDN-kompatibles, digitales Gerät. Demzufolge ist als Fernmeldegebührenminimierungsrouter-Anschlussverbindung 3.2 eine digitale Basisanschlussleitung (ISDN/BRA, Base Rate Access) oder eine digitale Primäranschlussleitung (ISDN/PRA, Primary Rate Access) vorgesehen.

Der in der Figur 1 dargestellte Fernmeldegebührenminimierungsrouter 1.1 weist die Form einer diskreten Schaltung auf und umfasst eine Steuerungsschaltungsanordnung 12 sowie Speichermittel 14. Die Steuerungsschaltungsanordnung 12 ist mit Mikroprozessormitteln versehen und mit der Speichervorrichtung 14 verbunden.

Die Steuerungsschaltungsanordnung 12 ist mit dem Telefongerät 5.1 verbunden und umfasst Mittel zum Empfangen einer von einem Anrufer mittels des Telefongerätes 5.1 gewählten Nummer eines anzurufenden Fernmeldeanschlusses. Im Beispiel der Figur 1 handelt es sich beim anzurufenden Fernmeldeanschluss um den derTeilnehmervermittlungsanlage 5.2 zugeordneten Fernmeldeanschluss 2.2.

Die Steuerungsschaltungsanordnung 12 umfasst weiter Mittel, um in Abhängigkeit der in der Speichervorrichtung 14 gespeicherten Routingdaten und der vom Telefongerät 5.1 empfangenen Nummer des anzurufenden Fernmeldeanschlusses 2.2 einen Übertragungsweg zwischen dem Fernmeldeanschluss 2.1 des Fernmeldegebührenminimierungsrouters 1.1 und dem anzurufenden Fernmeldeanschluss 2.2 auszuwählen.

Weiter umfasst die Steuerungsschaltungsanordnung 12 des Fernmeldegebührenminimierungsrouter 1.1 Mittel zum selbsttätigen wiederholten Empfangen von Routingdaten und Mittel zum Speichern dieser Routingdaten in der Speichervorrichtung 14. Die Routingdaten umfassen typischerweise tabellarisch nach den anzurufenden Zonen (z.B. Länder) geordnete Daten wie Angabe der Zeiten, während denen das Routing zu einer Zone über ein bestimmtes Netz zu erfolgen hat, Zugangscode zur Zone über dieses Netz, Gebühreninformationen für die Verbindung zur Zone über das Netz zu den angegebenen Zeiten usw.

Der Fernmeldegebührenminimierungsrouter 1.1 umfasst weiter Mittel zum Erzeugen von Gebührenimpulsen in Abhängigkeit der gespeicherten Routingdaten und des zwischen dem Fernmeldeanschluss 2.1 des Fernmeldegebührenminimierungsrouters 1.1 und dem anzurufenden Fernmeldeanschluss 2.2 ausgewählten Übertragungsweges. Diese Gebührenimpulse werden an das Telefon 5.1 übertragen und von diesem zur aktuellen Anzeige der laufenden Telefongebühren für eine Telefonverbindung und zur Vorkalkulation der Telefongebühren verwendet.

Der Fernmeldegebührenminimierungsrouter 1.1 umfasst weiter eine Vorrichtung zum wahlweisen Ein- und Ausschalten der Erzeugung einer Zufallsfunktion, die zur Bestimmung des Zeitpunktes zum Abfragen der Routingdaten bei der Serviceplattform 8 verwendet wird.

Die Serviceplattform 8 ist über eine digitale Primäranschlussleitung (ISDN/PRA, Primary Rate Access) an einen Fernmeldeanschluss 2.3 des Fernmeldenetzes 6.3 angeschlossen und umfasst eine Steuerungsschaltungsanordnung 82 sowie mit dieser verbundene Speichermittel 84. Bei der Serviceplattform 8 handelt es sich um eine auf einem Computer basierende Serviceplattform, deren Steuerungsschaltungsanordnung 82 mit Mikroprozessormitteln versehen ist. Die Serviceplattform 8 wird typischerweise von einem Betreiber des Fernmeldegebührenminimierungsservices betrieben.

Die aktuellsten Fernmeldegebührendaten von verschiedenen Fernmeldebetriebsgesellschaften für verschiedene Übertragungswege über verschiedene Fernmeldenetze 6.1 bis 6.5 werden von Zeit zu Zeit auf die Serviceplattform 8 übertragen. Dort werden die Fernmeldegebührendaten in der Speichervorrichtung 84 gespeichert und zu Routingdaten für die verschiedenen Fernmeldegebührenminimierungsrouter 1.1, 1.2 aufbereitet, die wiederum in der Speichervorrichtung 84 gespeichert werden.

Der Schritt des Aufbereitens der Routingdaten aus den Fernmeldegebührendaten umfasst eine Optimierung der Auswahl von möglichen Übertragungswegen zwischen Fernmeldeanschlüssen hinsichtlich der Fernmeldegebührenminimierung. Diese Optimierung beruht auf einem einfachen und schnellen Sortierverfahren. Beim Aufbereiten der Routingdaten für die verschiedenen Fernmeldegebührenminimierungsrouter 1.1, 1.2 werden u.a. auch gerätespezifische Angaben (z.B. maximale Speicherkapazität der Speichervorrichtung 14 des Fernmeldegebührenminimierungsrouters 1.1) und benutzerspezifische Angaben (z.B. bevorzugte Benutzung einer bestimmten Fernmeldebetriebsgesellschaft, Ausschluss einer bestimmten Fernmeldebetriebsgesellschaft, zeitlicher Detaillierungsgrad für die Gebührenminimierung usw.) berücksichtigt.

Die auf den aktualisierten und hinsichtlich der Fernmeldegebührenminimierung optimierten Fernmeldegebührendaten beruhenden Routingdaten umfassen für jeden der von der Serviceplattform 8 zu bedienenden Fernmeldegebührenminimierungsrouter 1.1, 1.2 die tabellarisch nach den anzurufenden Zonen (wie z.B. Länder, Fernmeldebezirke, Städte) geordneten Daten mit Angaben der Zeiten, während denen das Routing vom dem Fernmeldegebührenminimierungsrouter zugeordneten Fernmeldeanschluss zu einer Zone über ein bestimmtes Netz zu erfolgen hat, des Zugangscodes zur Zone über dieses Netz und der Gebühreninformationen für die Verbindung zur Zone über dieses Netz zu den angegebenen Zeiten.

Beim in der Figur 1 dargestellten Ausführungsbeispiel der Erfindung werden die Abfragen der Routingdaten durch die Fernmeldegebührenminimierungsrouter 1.1, 1.2 initiiert. Bei einer Abfrage werden durch die Serviceplattform 8 mittels in der Speichervorrichtung 84 der Serviceplattform 8 gespeicherten fernmeldegebührenminimierungsrouterspezifischen Daten aus der Vielzahl der gespeicherten Routingdaten diejenigen bestimmt, die für den jeweiligen Fernmeldegebührenminimierungsrouter 1.1 relevant sind, und anschliessend nur die für den jeweiligen Fernmeldegebührenminimierungsrouter 1.1 relevanten Routingdaten zum Fernmeldegebührenminimierungsrouter 1.1 übertragen.

Der Fernmeldegebührenminimierungsrouter 1.1 fragt selbsttätig immer wieder aktualisierte und optimierten Routingdaten von der Serviceplattform 8 ab, empfängt diese Routingdaten und speichert sie in seiner Speichervorrichtung 14. Zum Initiieren einer Abfrage stellt Fernmeldegebührenminimierungsrouter 1.1 eine Fernmeldeverbindung von seinem zugeordneten Fernmeldeanschluss 2.1 zum Fernmeldeanschluss 2.3 der Serviceplattform 8 her. Anschliessend übermittelt er eineAbfragesequenz, welche eine ldentifikationsnummer des Fernmeldegebührenminimierungsrouters 1.1 und den Zeitpunkt der letzten Abfrage umfasst. Als Antwort auf dieAbfragesequenz übermittelt die Serviceplattform 8 die für den Fernmeldegebührenminimierungsrouters 1.1 relevanten Routingdaten an den Fernmeldegebührenminimierungsrouters 1.1, der sie in seiner Speichervorrichtung 14 speichert.

Die Abfragesequenz wird in der Speichervorrichtung 84 der Serviceplattform 8 gespeichert. Von Zeit zu Zeit überprüft die Serviceplattform 8 dieAbfragesequenzen sämtlicher Fernmeldegebührenminimierungsrouter, um einen allfälligen Fehlbetrieb eines Fernmeldegebührenminimierungsrouters zu erkennen und anzuzeigen.

Wenn die Vorrichtung zum wahlweisen Ein- und Ausschalten der Erzeugung einer Zufallsfunktion des Fernmeldegebührenminimierungsrouters 1.1 eingeschaltet ist, wird der Abfragezeitpunkt festgelegt, indem zu regelmässigen Zeitabständen eine mit Hilfe der Zufallsfunktion bestimmte Zeitspanne addiert wird. Dadurch wird verhindert, dass eine Vielzahl von Routingdatenabfragen von verschiedenen Fernmeldegebührenminimierungsroutern 1.1, 1.2 gleichzeitig bei der Serviceplattform 8 eintreffen, was eine Überlastung des Fernmeldeanschlusses 2.3 bei der Serviceplattform 8 oder eine Überlastung der Serviceplattform 8 selbst zur Folge haben könnte.

Wenn die Vorrichtung zum wahlweisen Ein- und Ausschalten der Erzeugung einer Zufallsfunktion des Fernmeldegebührenminimierungsrouters 1.1 ausgeschaltet ist, werden die Routingdaten vom Fernmeldegebührenminimierungsrouter 1.1 im wesentlichen in regelmässigen Zeitabständen bei der Serviceplattform 8 abgefragt und anschliessend in der Speichervorrichtung 14 des Fernmeldegebührenminimierungsrouters 1.1 gespeichert.

Nach dem Einstellen der Nummer eines anzurufenden Fernmeldeanschlusses 2.2 am Telefon 5.1 wird diese Nummer vom Fernmeldegebührenminimierungsrouter 1.1 empfangen. Daraufhin wählt der Fernmeldegebührenminimierungsrouter 1.1 in Abhängigkeit der in der Speichervorrichtung gespeicherten Routingdaten und der Nummer des anzurufenden Fernmeldeanschlusses 2.2 einen Übertragungsweg zwischen seinem zugeordneten Fernmeldeanschluss 2.1 und dem anzurufenden Fernmeldeanschluss 2.2 aus und sendet Signale über seinen zugeordneten Fernmeldeanschluss 2.1 aus, um eine Verbindung zwischen den beiden Fernmeldeanschlüssen 2.1 und 2.2 herzustellen.

Sobald die Verbindung hergestellt ist, erzeugt der Fernmeldegebührenminimierungsrouter 1.1 in Abhängigkeit der gespeicherten Routingdaten und des zwischen seinem zugeordneten Fernmeldeanschluss 2.1 und dem anzurufenden Fernmeldeanschluss 2.2 ausgewählten Übertragungsweges Gebührenimpulse, die zum Telefon 5.1 übertragen werden. Das Telefon 5.1 zeigt aufgrund dieser Gebührenimpulse die für die bestehende Verbindung anfallenden Fernmeldegebühren laufend an und speichert sie nach Beendigung des Telefongesprächs zum Zwecke der Vorkalkulation.

Zusammenfassend ist festzustellen, dass durch die vorliegende Erfindung ein Verfahren für das Routing zum Minimieren von Fernmeldegebühren und eine Anordnung zur Durchführung des Verfahrens bereitgestellt werden, die gewährleisten, dass im Fernmeldegebührenminimierungsrouter stets aktuelle Fernmeldegebührendaten der verschiedenen Fernmeldebetriebsgesellschaften für verschiedene Übertragungswege gespeichert sind.

## Patentansprüche

1. Verfahren für das Routing zum Minimieren von Fernmeldegebühren, bei dem ein an einem Fernmeldeanschluss (2.1) angeschlossener Fernmeldegebührenminimierungsrouter (1.1) in Abhängigkeit von gespeicherten Routingdaten und einer von einem Anrufer gewählten Nummer eines anzurufenden Fernmeldeanschlusses (2.2) einen Übertragungsweg zwischen dem Fernmeldeanschluss (2.1) des Fernmeldegebührenminimierungsrouters (1.1) und dem anzurufenden Fernmeldeanschluss (2.2) auswählt, dadurch gekennzeichnet, dass der Fernmeldegebührenminimierungsrouter (1.1) selbsttätig wiederholt aktualisierte und hinsichtlich der Fernmeldegebührenminimierung optimierte Routingdaten von einer Serviceplattform (8) empfängt und speichert.

2. Verfahren nach Anspruch 1, dadurch gekennzeichnet, dass die aktualisierten und optimierten Routingdaten vom Fernmeldegebührenminimierungsrouter (1.1) bei der Serviceplattform (8) abgefragt und in einer Speichervorrichtung (14) des Fernmeldegebührenminimierungsrouters (1.1) gespeichert werden, wobei der Zeitpunkt zum Abfragen der Routingdaten festgelegt wird, indem zu regelmässigen Zeitabständen eine mit Hilfe einer Zufallsfunktion bestimmte Zeitspanne addiert wird, um zu verhindern, dass eine Vielzahl von Routingdatenabfragen von verschiedenen Fernmeldegebührenminimierungsroutern (1.1, 1.2) gleichzeitig bei der Serviceplattform eintrifft.

3. Verfahren nach Anspruch 1 oder 2, dadurch gekennzeichnet, dass der Fernmeldegebührenminimierungsrouter (1.1) selbsttätig wiederholt Daten an die Serviceplattform (8) übermittelt und die Serviceplattform (8) die Funktionsfähigkeit des Fernmeldegebührenminimierungsrouter (1.1) anhand dieser Daten überwacht.

4. Verfahren nach einem der Ansprüche 1 bis 3, dadurch gekennzeichnet, dass der Fernmeldegebührenminimierungsrouter (1.1) in Abhängigkeit der gespeicherten Routingdaten und des zwischen dem Fernmeldeanschluss (2.1) des Fernmeldegebührenminimierungsrouters (1.1) und dem anzurufenden Fernmeldeanschluss (2.2) ausgewählten Übertragungsweges Gebührenimpulse erzeugt.

5. Verfahren nach einem der Ansprüche 1 bis 4, dadurch gekennzeichnet, dass durch die Serviceplattform (8) mittels in einer Speichervorrichtung (84) der Serviceplattform (8) gespeicherten Daten über den Fernmeldegebührenminimierungsrouter (1.1) aus der Vielzahl der gespeicherten Routingdaten die für den Fernmeldegebührenminimierungsrouter (1.1) relevanten Routingdaten bestimmt werden und durch den Fernmeldegebührenminimierungsrouter (1.1) bloss die für ihn relevanten Routingdaten empfangen werden.

6. Anordnung zur Durchführung des Verfahrens nach einem der Ansprüche 1 bis 5, gekennzeichnet durch mindestens einen an einem Fernmeldeanschluss (2.1) angeschlossenen Fernmeldegebührenminimierungsrouter (1.1), der zum Auswählen eines Übertragungsweges zwischen dem Fernmeldeanschluss (2.1) des Fernmeldegebührenminimierungsrouters (1.1) und einem anzurufenden Fernmeldeanschluss (2.2) sowie zum selbsttätigen wiederholten Empfangen und Speichern von Routingdaten ausgebildet ist, und eine Serviceplattform (8), die zum Sammeln und Aktualisieren von Fernmeldegebührendaten, Aufbereiten - in Abhängigkeit der gesammelten Fernmeldegebührendaten - von hinsichtlich der Fernmeldegebührenminimierung optimierten Routingdaten, Speichern von Routingdaten und Übermitteln von Routingdaten an den mindestens einen Fernmeldegebührenminimierungsrouter (1.1) ausgebildet ist.

7. Fernmeldegebührenminimierungsrouter (1.1) für Anordnung nach Anspruch 6, gekennzeichnet durch Mittel zum Anschliessen des Fernmeldegebührenminimierungsrouters (1.1, 1.2) an einen Fernmeldeanschluss (2.1), Mittel zum Empfangen einer von einem Anrufer gewählten Nummer eines anzurufenden Fernmeldeanschlusses (2.2), Mittel zum Auswählen - in Abhängigkeit von gespeicherten Routingdaten und der empfangenen Nummer - eines Übertragungsweges zwischen dem Fernmeldeanschluss (2.1) des Fernmeldegebührenminimierungsrouter (1.1) und dem anzurufenden Fernmeldeanschluss (2.2), Mittel zum selbsttätigen wiederholten Empfangen von Routingdaten und Mittel (14) zum Speichern der Routingdaten.

8. Fernmeldegebührenminimierungsrouter (1.1) nach Anspruch 7, gekennzeichnet durch Mittel zum Erzeugen von Gebührenimpulsen in Abhängigkeit der gespeicherten Routingdaten und des zwischen dem Fernmeldeanschluss (2.1) des Fernmeldegebührenminimierungsrouters (1.1) und dem anzurufenden Fernmeldeanschluss (2.2) ausgewählten Übertragungsweges.

9. Fernmeldegebührenminimierungsrouter (1.1) nach Anspruch 7 oder 8, gekennzeichnet durch Mittel zum Bestimmen des Zeitpunktes zum Abfragen der Routingdaten bei der Serviceplattform (8) derart, dass zu regelmässigen Zeitabständen eine mit Hilfe einer Zufallsfunktion bestimmte Zeitspanne addiert wird, um zu verhindern, dass eine Vielzahl von Routingdatenabfragen von verschiedenen Fernmeldegebührenminimierungsroutern (1.1, 1.2) gleichzeitig bei der Serviceplattform (8) eintrifft.

10. Serviceplattform (8) für Anordnung nach Anspruch 6, gekennzeichnet durch Mittel zum Empfangen von Daten über Fernmeldegebühren einer oder mehrerer Fernmeldebetriebsgesellschaften für ein oder mehrere Fernmeldenetze (6.1 6.5), Mittel zum Aufbereiten - in Abhängigkeit der gesammelten Fernmeldegebührendaten - von hinsichtlich der Fernmeldegebührenminimierung optimierten Routingdaten, Mittel (84) zum Speichern der Routingdaten und Mittel zum Übermitteln von Routingdaten an mindestens einen Fernmeldegebührenminimierungsrouter (1.1).
